# EUROPÄISCHE PATENTSCHRIFT

(11) **EP 2 713 560 B1**
(45) Veröffentlichungstag und Bekanntmachung des Hinweises auf die Patenterteilung: **04.03.2015**
(21) Anmeldenummer: 13199721.5
(22) Anmeldetag: 16.07.2012
(51) Int. Cl.: H04L 12/24, H04L 12/40, H04L 12/935

(54) **Verfahren zum Betreiben eines Transceivers eines an einen Datenbus angeschlossenen Bus-Teilnehmers**
Method for operating a transceiver of a bus participant connected to a data bus
Procédé de fonctionnement d'un transpondeur connecté à un bus de données

(43) Veröffentlichungstag der Anmeldung: 02.04.2014
(62) Teilanmeldung aus: 12176545.7
(73) Patentinhaber: ELMOS Semiconductor AG, 44227 Dortmund (DE)
(72) Erfinder: Schmitz, Christian, 44227 Dortmund (DE); Watroba, Radoslaw, 85221 Dachau (DE)
(74) Vertreter: Von Kreisler Selting Werner - Partnerschaft von Patentanwälten und Rechtsanwälten mbB

(56) Entgegenhaltungen:
- US-A1- 2009 327 506
- US-A1- 2010 111 081
- US-A1- 2010 229 013

## Beschreibung

Die Erfindung betrifft ein Verfahren zum Betreiben eines Transceiver eines an einen Datenbus angeschlossenen Bus-Teilnehmers, oder anders ausgedrückt, ein Verfahren für das Transceiver-Management eines Bus-Teilnehmers. Insbesondere betrifft die Erfindung ein Verfahren zur Konfiguration, Zustandssteuerung und Diagnose von Transceivern ausschließlich über deren Datenbus-Kommunikationsschnittstellen.

Technische Lösungen für Netzwerke erfordern häufig eine Konfiguration, Diagnose und Zustandssteuerung der Transceiver der Datenbus-Teilnehmer des Netzwerks. Bei einem Transceiver handelt es sich um die Schnittstelle zwischen dem Datenbus und einem Microcontroller des Teilnehmers.

Heutige Konfigurationsschnittstellen verwenden entweder standardisierte Schnittstellen, wie z.B. SPI, I2C, oder andere proprietäre Schnittstellen. Die Transceiver-Pins (TXD/RXD) werden üblicherweise exklusiv für die Nutzdaten-Kommunikation über den Datenbus verwendet.

Die bisher üblicherweise für die Betriebssteuerung von Transceivern eingesetzten Verfahren setzen zusätzliche (Steuerungs-)Pins an den Transceivern voraus, die häufig ausschließlich für diesen Zweck vorzuhalten sind. Aufgrund der voranschreitenden Miniaturisierung werden immer häufiger sehr kleine Gehäuse mit nur wenigen IC-Pins gefordert, wobei nichtsdestotrotz sämtliche Freiheitsgrade der Konfigurierbarkeit, der Zustandssteuerung und der Diagnosefähigkeit von Transceivern gegeben sein sollen.

Ein Verfahren zum Betreiben eines Transceiver gemäß dem Oberbegriff des Patentanspruchs 1 ist aus US-A-2010/111081 bekannt.

Aus US-A-2010/0229013 ist eine externe Datenübertragung über MACSec bekannt, wobei Kontroll-/Einstellungsdaten für die Physical Transceiver zwischen Netzknoten übertragen werden.

Aufgabe der Erfindung ist es, ein Verfahren zum Betreiben eines Transceiver eines an einem Datenbus angeschlossenen Bus-Teilnehmers anzugeben, mit dem sich auch bei reduzierter Anzahl von Anschlüssen, das heißt IC-Pins, der Transceiver wie bisher bezüglich seines Betriebs und seiner Betriebseinstellungen steuern lassen kann.

Zur Lösung dieser Aufgabe wird mit der Erfindung ein Verfahren zum Betreiben eines Transceiver eines an einen Datenbus angeschlossenen Bus-Teilnehmers vorgeschlagen, wobei der Bus-Teilnehmer ferner eine Steuereinheit (z.B. Microcontroller, State-Machine, fest verdrahtete Logik) aufweist, und wobei der Transceiver zwischen den Datenbus und der Steuereinheit geschaltet ist und gemäß einem Bus-Protokoll Befehle und Betriebsdaten für seinen Betrieb erhält sowie über den Datenbus Nutzdaten empfängt und sendet, wobei das erfindungsgemäße Verfahren die Merkmale des Patentanspruchs 1 aufweist. Eine Ausgestaltung des Verfahrens ist in Patentanspruch 2 angegeben.

Mit der Erfindung wird sinngemäß vorgeschlagen, die Betriebssteuerung (d.h. das Management), also insbesondere die Konfiguration, Diagnose und die Zustandssteuerung des Transceiver über die in jedem Fall vorhandene Nutzdaten-Kommunikationsschnittstelle zu realisieren, und zwar sowohl hinsichtlich einer lokal vorzunehmenden Betriebssteuerung als auch hinsichtlich einer Betriebssteuerung über den Datenbus. Erfindungsgemäß kann also auf Seiten des Transceiver auf Steuerungspins o.dgl. Anschlüsse verzichtet werden. Der Transceiver wertet die Kommunikation, die z.B. auch gemäß dem von dem Datenbus-Typ abhängigen Kommunikationsprotokoll erfolgen kann, aus und interpretiert den Inhalt bestimmter Befehle, wie sie z.B. auch für die Nutzdatenkommunikation vorgesehen sein können, als Konfigurations-, Zustandssteuerungs- und/oder Diagnose-Anforderung bzw. allgemein für das Transceiver-Management. Vom Transceiver gesendete Diagnoseinformation kann sowohl lokal als auch busseitig auf der Kommunikationsschnittstelle des Transceiver gesendet werden, und zwar sowohl zur Steuereinheit als auch zum Datenbus hin.

Zur Hardware-Realisierung des erfindungsgemäßen Verfahrens bedarf es in dem Bus-Teilnehmer bzw. im Transceiver einer Logikeinheit, die in der Lage ist, die Bus-Kommunikation und die Kommunikation von der Steuereinheit zu empfangen und zu dekodieren. Die übertragenen Transceiver-ManagementDaten werden dann vom Transceiver produktspezifisch interpretiert und verwendet.

Die Erfindung wird nachfolgend unter Bezugnahme auf die Zeichnung näher erläutert. Im Einzelnen zeigen dabei:
Fign. 1 bis 4
   vier verschiedene Szenarien für ein Transceiver-Management, wobei mit dünnen Einzel- bzw. Doppelpfeilen eine uni- bzw. bidirektionale Kommunikation von Nutzdaten und mit dickeren Einzel-bzw. Doppelpfeilen eine uni- bzw. bidirektionale Kommunikation von Managementdaten über die internen Verbindungsanschlüsse TXD und RXD eines Bus-Teilnehmers bzw. über die Busanschlüsse des Bus-Teilnehmers/Transceiver gemeint ist.

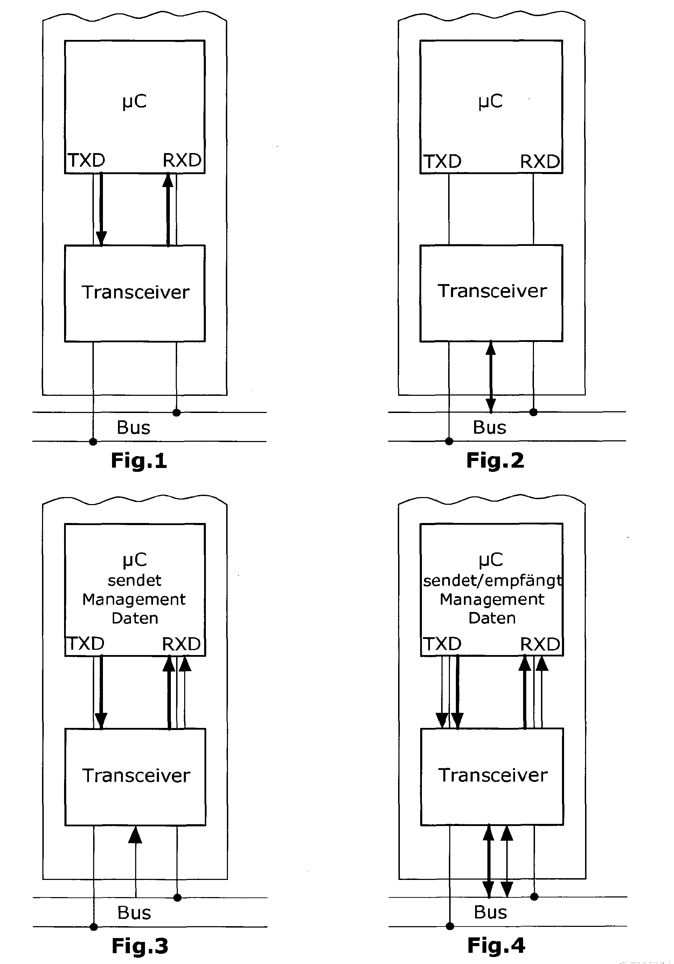

Bei dem Gegenstand der Fig. 2 handelt es sich um ein Ausführungsbeispiel nach der Erfindung. Die anderen Figuren dienen lediglich dem besseren Verständnis der Erfindung.

Fig. 1 zeigt den Fall eines auf sowohl Management als auch Nutzdaten bezogenen lokalen Transceiver-Managements, bei dem das Senden von Management- und Nutzdaten vom Transceiver zum Datenbus sowie das Empfangen von Daten seitens des Transceiver vom Datenbus deaktiviert sind. Hierbei kommuniziert die in dem Beispiel als Microcontroller µC realisierte Steuereinheit des Bus-Teilnehmers zum Betreiben von dessen Transceiver mit diesem Betriebsdaten lokal, wobei eine Bus-Kommunikation des Transceiver mit dem Datenbus bezüglich Betriebsdaten unterbunden ist und wobei eine Kommunikation von Nutzdaten zwischen dem Datenbus und dem Transceiver und/oder zwischen dem Transceiver und dem Microcontroller in jeweils beiden Richtungen unterbunden ist.

Die Transceiver-Management-Kommunikation erfolgt bidirektional zwischen der Kommunikations-/Steuereinheit und dem Transceiver, wobei die Konfiguration oder allgemein das Transceiver-Management busseitig, also zum Datenbus hin, "nicht sichtbar ist", das heißt nicht kommuniziert wird. Die Kommunikations-/Steuereinheit nimmt nicht an der externen Datenbus-Kommunikation teil. Der Transceiver dekodiert die vom Microcontroller kommenden Managementdaten und verwendet diese applikationsspezifisch.

Als Anwendungsfall kann man beispielsweise an die Konfiguration des Transceiver über die lokale Kommunikations-Schnittstelle (zwischen Transceiver und Microcontroller) z.B. während der Initialisierung eines Steuergeräts des betreffenden Teilnehmers denken, wobei dieses Steuergerät noch nicht an der Datenbus-Kommunikation teilnimmt. Die Konfiguration des Transceiver erfolgt ausschließlich lokal. Das kann beispielsweise immer dann der Fall sein, wenn ein Bus-Teilnehmer für einen bestimmten Operationszustand vorbereitet wird, beispielsweise bezüglich der Vergabe der ID und des Dateninhalts im z.B. partiellen Netzwerk, auf welches reagiert werden soll, wobei das Steuergerät nicht aktiv an der Bus-Kommunikation teilnehmen soll. Nachdem beispielsweise ein Transceiver-Fehler festgestellt wurde, wird dieser Transceiver bzw. der Teilnehmer vom restlichen Netzwerk abgekoppelt, und die Fehlerursache kann lokal abgefragt werden. Über dezidierte Botschaften kann ferner der Funktionszustand des Transceiver lokal bestimmt werden, ohne aktiv an der Bus-Kommunikation teilnehmen zu müssen.

Fig. 2 zeigt ein Ausführungsbeispiel eines erfindungsgemäßen Szenarios bei einem busseitigen Transceiver-Management, d.h. ein über den Datenbus gesteuertes Transceiver-Management (listen only, keine Weiterleitung der Managementdaten an den Mikrocontroller, auch kein Empfang von Nutzdaten vom Datenbus bzw. kein Senden von Nutzdaten auf den Datenbus). Hierbei ist vorgesehen, dass der Transceiver des Bus-Teilneh-mers über den Datenbus Betriebs- bzw. Managementdaten bidirektional kommuniziert, wobei eine lokale Kommunikation zwischen dem Transceiver des Bus-Teilnehmers und dessen Microcontroller bezüglich sowohl Betriebsdaten als auch Nutzdaten unterbunden ist.

Gemäß dem Szenario nach Fig. 2 werden Transceiver-Managementdaten bidirektional vom Datenbus zum Transceiver kommuniziert, wobei die Kommunikation zum Bus transparent, also vom Bus aus bzw. zum Bus erfolgt, nicht aber zur Kommunikations-/Steuereinheit des Microcontrollers. Der Transceiver dekodiert die Managementdaten und verwendet diese applikationsspezifisch.

Als Anwendungsfall sei beispielsweise an eine busseitige Diagnose des Transceiver gedacht, während das lokale Steuergerät des Teilnehmers abgeschaltet ist. Der Transceiver ist aber nichtsdestotrotz empfangsbereit, und zwar für vom Datenbus kommende Managementdaten bzw. zum Senden von Managementdaten bzw. deren Quittierung auf den Datenbus. Der Transceiver kann z.B. aus der Ferne hinsichtlich Diagnose-Informationen abgefragt werden (z.B. Zustandsabfrage durch das Netzwerkmanagement). Eine busseitige Konfiguration des Transceiver ist beispielsweise möglich. Befindet sich z.B. das Steuergerät in einem Zustand, in dem nur der Transceiver empfangsbereit ist, kann dieser aus der Ferne mit Konfigurationsdaten versehen werden (z.B. Änderung der Konfiguration im beispielsweise partiellen Netzwerk durch das Netzwerkmanagement). Ebenfalls ist eine busseitige Diagnose des Transceiver möglich. Während das lokale Steuergerät abgeschaltet ist, aber der Transceiver empfangsbereit ist, kann dieser aus der Ferne hinsichtlich Diagnose abgefragt werden (z.B. Zustandsabfrage durch das Netzwerkmanagement).

In Fig. 3 ist ein Szenario für ein lokales Transceiver-Management bei Empfangsbereitschaft des Steuergeräts des Teilnehmers für Nutzdaten gezeigt. Hierbei kommuniziert der Microcontroller lokal mit dem Transceiver zum Betreiben desselben Betriebsdaten, wobei eine Bus-Kommunikation des Transceiver mit dem Datenbus bezüglich Betriebs- bzw. Managementdaten unterbunden ist und wobei eine einseitige Kommunikation von Nutzdaten zwischen dem Datenbus und dem diese Nutzdaten an den Microcontroller weiterleitenden Transceiver und eine einseitige Kommunikation von Nutzdaten zwischen dem Transceiver und dem Microcontroller, ohne dass der Transceiver Nutzdaten an den Bus kommuniziert, gegeben ist.

Die Transceiver-Managementdaten-Kommunikation von der Kommunikations-/ Steuereinheit des Microcontrollers zum Transceiver ist möglich, wobei die Konfiguration zum Datenbus hin nicht "sichtbar" ist, die ECU des Transceiver aber empfangsfähig bleibt (analog zu "listen only"). Der Transceiver dekodiert diese Managementdaten und verwendet sie applikationsspezifisch. Eine Applikation kann, wie oben im Zusammenhang mit Fig. 1 beschrieben, beispielsweise die lokale Konfiguration/Diagnose des Transceiver sein, wobei der Datenübertragungskanal des Steuergeräts des Teilnehmers sende- und empfangsbereit bleibt. Dadurch können sowohl die externe Buskommunikation als auch Konfigurations- und Diagnoseanforderungen empfangen werden. Zusätzlich kann der Microcontroller auf diese reagieren und lokal entsprechende Konfigurations- und Diagnosebotschaften absetzen, die ausschließlich dem Transceiver zugedacht sind, also auf dem Datenbus nicht "sichtbar" sind. Hierbei kann beispielsweise ein entfernt angeordnetes Steuergerät eines anderen Teilnehmers Netzwerkmanagementbotschaften versenden, die von der lokalen Einheit, d.h. dem hier betrachteten Teilnehmer, entsprechend in lokale Konfiguration/Diagnose seines Transceiver umgesetzt werden.

Schließlich zeigt Fig. 4 ein Beispiel für ein transparentes Transceiver-Management, bei dem der Microcontroller des Bus-Teilnehmers zum Betreiben von dessen Transceiver mit diesem Betriebsdaten lokal kommuniziert, wobei eine Bus-Kommunikation des Transceiver mit dem Datenbus bezüglich Betriebsdaten unterbunden ist, wobei die Betriebseinstellungen des Transceiver mit dem Datenbus kommuniziert werden und wobei Nutzdaten zwischen dem Datenbus und dem Microcontroller über den Transceiver in beiden Richtung kommuniziert werden.

Transceiver-Managementdaten-Kommunikation ist dabei bidirektional zwischen der Kommunikations-/Steuereinheit des Microcontrollers und dem Transceiver möglich, wobei die Konfiguration transparent auf dem Datenbus "sichtbar" ist. Der Transceiver dekodiert diese Managementdaten und verwendet sie applikationsspezifisch. Als Anwendungsfall ist der eines externen Steuergeräts denkbar, das Netzwerkmanagementdaten versendet, die vom Transceiver eines anderen Teilnehmers dekodiert und umgesetzt werden. Der lokale (d.h. innerhalb des Teilnehmers) Microcontroller des angesprochenen Teilnehmers erhält diese Daten parallel. Weiterhin kann das Transceiver-Management lokal (d.h. innerhalb des Teilnehmers) stattfinden, wobei diese Managementdaten im gesamten Netz "sichtbar" sind.

## Patentansprüche

1. Verfahren zum Betreiben eines Transceiver eines an einen Datenbus angeschlossenen Bus-Teilnehmers, der ferner eine Steuereinheit aufweist, wobei der Transceiver zwischen dem Datenbus und der Steuereinheit geschaltet ist und gemäß einem Bus-Protokoll Befehle und Betriebsdaten für seinen Betrieb erhält sowie über den Datenbus Nutzdaten empfängt und sendet, wobei bei dem Verfahren
- der Transceiver für seinen Betrieb an seinen für die Nutzdaten vorgesehenen, mit dem Datenbus und der Steuereinheit verbundenen Ein- und/oder Ausgängen von der Steuereinheit oder über den Datenbus versendete Befehle empfängt und bei Empfang eines solchen Befehls dementsprechend betrieben wird,
- wobei der Transceiver des Bus-Teilnehmers über den Datenbus Betriebsdaten bidirektional kommuniziert, **dadurch gekennzeichnet, dass** eine lokale Kommunikation zwischen dem Transceiver des Bus-Teilnehmers und deren Steuereinheit bezüglich sowohl Betriebsdaten als auch Nutzdaten unterbunden ist.

2. Verfahren nach Anspruch 1, **dadurch gekennzeichnet, dass** es sich bei den Befehlen zum Betrieb des Transceiver um Befehle zur Zustandssteuerung, Konfiguration und/oder Diagnose des Transceiver handelt.

## Claims

1. A method for operating a transceiver of a bus participant connected to a data bus, the bus participant further comprising a control unit, the transceiver being connected between the data bus and the control unit and, according to a bus protocol, being supplied with instructions and operating data for its operation and receiving and transmitting useful data via the data bus, wherein, in said method
- the transceiver, for its operation, is operative to receive, at its inputs and/or outputs which are provided for the useful data and are connected to the data bus and the control unit, instructions transmitted by the control unit or via the data bus and, upon receipt of such an instruction, is operated in accordance with these instructions,
- the transceiver of the bus participant being operative to bidirectionally communicate operating data via the data bus, **characterized in that** a local communication between the transceiver of the bus participant and the control unit of the bus participant is prevented with respect to operating data as well as useful data.

2. The method according to claim 1, **characterized in that** the instructions for operating the transceiver are instructions for state control, configuration and/or diagnosis of the transceiver.

## Revendications

1. Procédé de fonctionnement d'un transpondeur d'un participant au bus connecté à un bus de données, qui comprend en outre une unité de commande, le transpondeur étant branché entre le bus de données et l'unité de commande et reçoit des commandes et des données de fonctionnement pour son fonctionnement et reçoit et fournit, par le bus de données, des données utiles, où, dans le procédé,
- le transpondeur reçoit pour son fonctionnement, à ses entrées et/ou sorties prévues pour les données utiles et reliées au bus de données et à l'unité de commande, des commandes envoyées par l'unité de commande ou via le bus de données et est fait fonctionner en conséquence suite à la réception d'une telle commande,
- où le transpondeur du participant de bus communique des données de fonctionnement de manière bidirectionnelle par le bus de données,
**caractérisé en ce qu'**une communication locale entre le transpondeur du participant du bus et son unité de commande est empêchée en ce qui concerne des données de fonctionnement et des données utiles.

2. Procédé selon la revendication 1, **caractérisé en ce que** les commandes pour faire fonctionner le transpondeur sont des commandes pour le contrôle de l'état, pour la configuration et/ou pour la diagnose du transpondeur.
